# EUROPEAN PATENT APPLICATION

(11) **EP 1 273 416 A1**
(43) Date of publication of application: **08.01.2003**
(21) Application number: 01305211.3
(22) Date of filing: 15.06.2001
(51) Int. Cl.: B29C 43/00, D04H 1/54

(54) **Amorphous polymer articles**

(71) Applicant: BTG INTERNATIONAL LIMITED, London EC4M 7SB (GB)
(72) Inventor: The designation of the inventor has not yet been filed
(74) Representative: Bingham, Ian Mark

(57) **Abstract**

The present invention provides an amorphous polymer article produced by hot compaction and a method of producing the same. The article is heated to a temperature and maintained at a pressure sufficient to cause softening of the polymer strands to sufficient a degree to allow bonding to adjacent fibres to take place without actually transforming the polymer into a liquid state.

## Description

The present invention relates to amorphous polymer articles and relates particularly, but not exclusively, to a method of producing such an article and an article comprising a hot compaction of amorphous polymer material

Hot compaction is a process which is well-known for use with semi-crystalline and crystalline polymer materials such as polypropylene and the like. During a heating step, a small portion of the surface of the polymer strand melts and during subsequent cooling re-crystallises in a different form from that of the initial material in a manner which facilitates bonding of the fibres to each other. Typically, several layers of the material are placed in a mould and then heated and pressed at a predetermined pressure for a predetermined period of time before being cooled and then removed from the mould. The specific temperatures, pressures and dwell times associated with the hot-compaction of particular polymer materials are normally determined by experimentation for each individual product. However, in each case the temperature pressure and dwell time will be sufficient to allow melting and inter-bonding of the outer layers of the polymer strands without destroying the properties of the core of each strand and the pressure will be sufficient to cause plastic flow of any softened material so as to encourage good bonding between adjacent polymer strands. It is important to appreciate that one should not over heat the polymer material as to do so might result in a final product which is of less than optimal performance.

The production of polymer articles by hot-compaction has, until now, been confined to crystalline or semi-crystalline polymers as such polymers have easily defined and distinct melting temperatures and it is, therefore, possible to accurately define a temperature and dwell time during which the outer surface of the polymer strands will melt and bond to each other whilst the inner core remains unaltered. Amorphous polymer materials do not have a specific and easily defined melting temperature but have what is known as a "glass temperature" "Tg" which is a temperature at and above which the polymer progressively softens and becomes more pliable without actually melting in the manner of crystalline or semi-crystalline materials. The particular glass temperature (Tg) for each amorphous polymer will vary depending on the particular material and also on the temperature of polymerisation.

We have now found that, surprisingly to us and quite unexpectedly in the light of the earlier work described above, amorphous polymer fibres can be compacted into monolithic articles and can also be compacted into monolithic articles by hot-compaction techniques. Additionally, other advantageous properties such as transparency can be achieved and this is in contrast with crystalline or semi-crystalline materials.

Accordingly, the present invention provides a method of producing an article comprising the steps of:
a) providing a raw material in the form of polymer elements;
b) heating said material to above a first predetermined temperature; and
c) compacting said material whilst above said first predetermined temperature, characterised in that:
   said raw material comprises an amorphous polymer and said temperature and pressure of compaction are sufficient to cause the polymer elements to bond to each other (without melting of the inner portion of the elements).

Preferably, the predetermined temperature comprises a temperature a predetermined value above the Tg temperature of the polymer.

Advantageously, the pressure and temperature of compaction are maintained for a predetermined period of time.

Preferably, the temperature is between 125°C and 190°C and is preferably between 135°C and 150°C.

Advantageously, the pressure of compaction is in the region of up to 100psi.

In a particular arrangement the temperature is preferably between 150°C and 190°C. In one arrangement the pressure of compaction may be up to 400psi.

According to a particular arrangement of the present invention there is provided a method as described above and further including the steps of:
(i) raising the temperature from a first, lower, temperature to a second, higher, temperature at a first rate over a first period of time;
(ii) holding the temperature at said second temperature for a second period of time;
(iii) raising the temperature from the second temperature to a third, higher, temperature at a second rate over a third period of time;
(iv) holding the temperature at said third temperature for a further period of time; and
(v) reducing the temperature from said third temperature in accordance with a predetermined cooling strategy.

In this particular method the following more specific steps may be incorporated:
(i) the temperature is increased to a second temperature of 135°C at 10°C/min;
(ii) the second temperature is held for between 5 minutes;
(iii) the temperature is increased to a third temperature of 152°C at approximately 1°C/min;
(iv) the third temperature is held for between 5 minutes and 27 minutes; and
(v) the temperature is then returned to a lower (room) temperature in accordance with the predetermined cooling strategy.

In a simplified arrangement the following steps may be used:
(i) applying the compaction pressure to the assembly;
(ii) raising the temperature from a first, lower, temperature to a compaction temperature;
(iii) holding the temperature at the compaction temperature for a period of time; and
(iv) reducing the temperature from the compaction temperature in accordance with the predetermined cooling strategy.

In a specific example of the simplified arrangement the pressure applied in step (i) is in the region of 2.8MPa (400psi to the assembly); the temperature is increased to 152°C which is held for between 5 and 27 minutes before returning to room temperature in accordance with a predetermined cooling strategy.

In a particularly advantageous arrangement the material comprises polyvinyl chloride (PVC).

In some arrangements it may be possible to combine amorphous and crystalline polymers together in order to produce a finished article with specific material properties.

Also claimed in the present application is an article manufactured in accordance with any of the above-mentioned method steps.

The present invention also provides an article comprising a hot compaction of amorphous polymer material.

The amorphous polymer material preferably comprises filaments/elements which are bonded to each other by means of the application of an elevated temperature and pressure.

Advantageously, the article comprises soft bonded elements of amorphous polymer material.

The present invention will now be more particularly described by way of example only with reference to the accompanying drawings in which:
Figure 1 illustrates the Tg temperature of PVC fabric;
Figure 2 illustrates the evolution of the glass temperature Tg and melting temperature Tm against the temperature of polymerisation for PVC;
Figures 3 to 24 are tables of various results discussed later herein;
Figure 25 illustrates a test sample as cut from the compacted sheets;
Figure 26 is a diagrammatic representation of a peel test apparatus; and
Figures 27 to 29 are graphs of average modulus, final strength and peel strength respectively.
Figure 30 illustrates the heating cycle;
Figure 31 is a diagrammatic representation of the compaction apparatus employed in the experiments described herein; and
Figure 32 is a graph illustrating the modulus and peel strength for samples created at different temperatures.

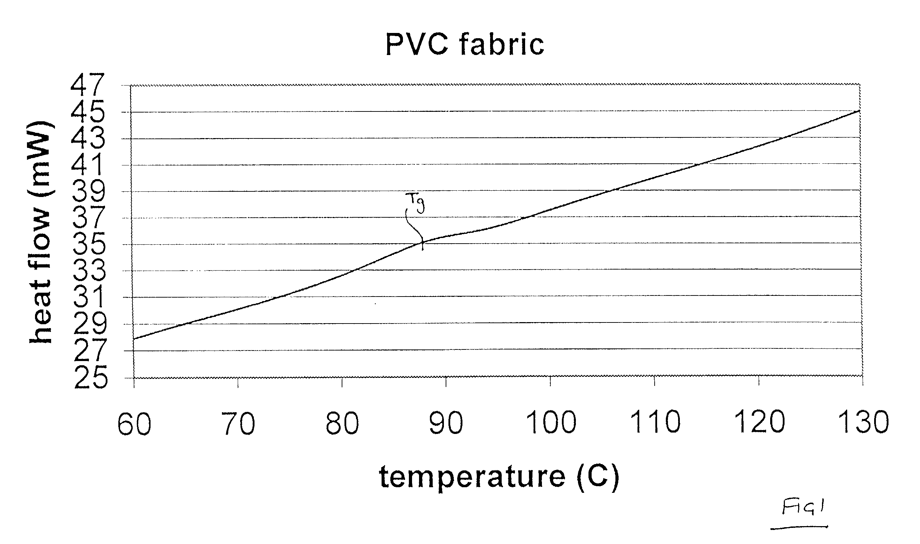

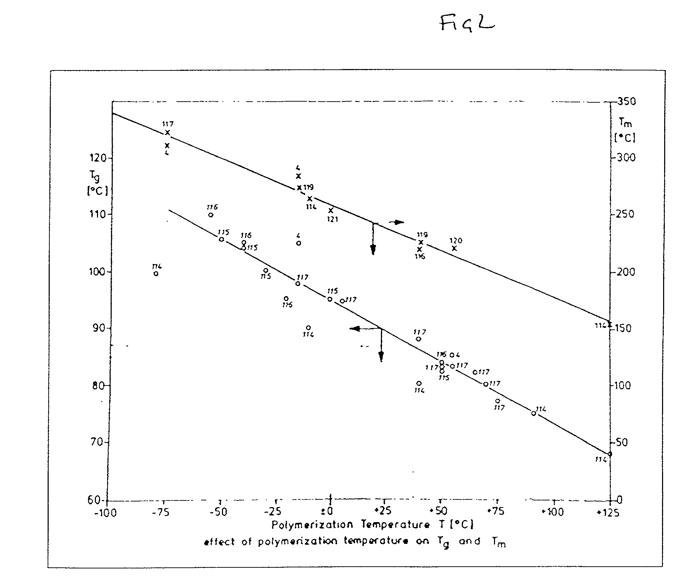

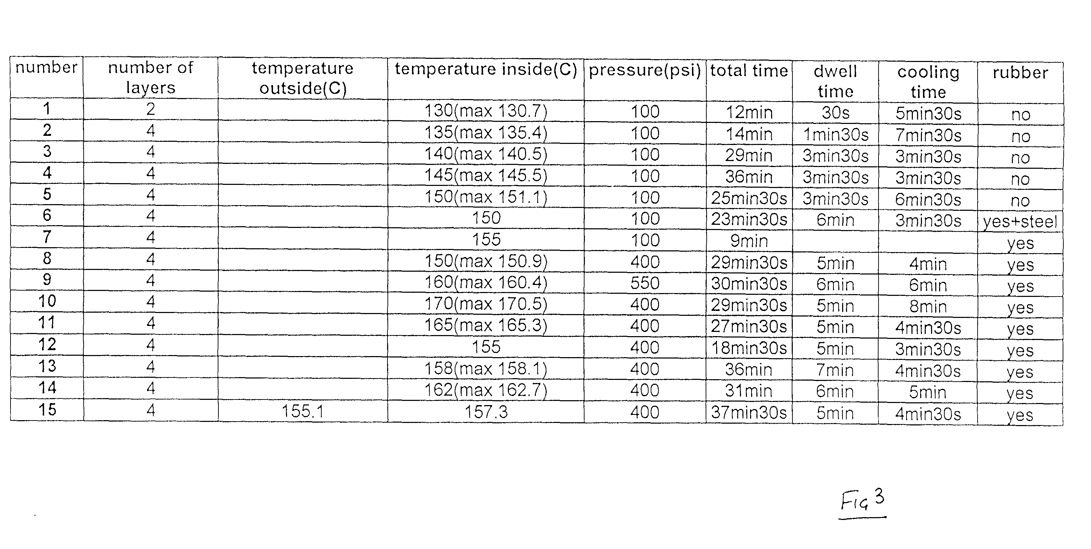

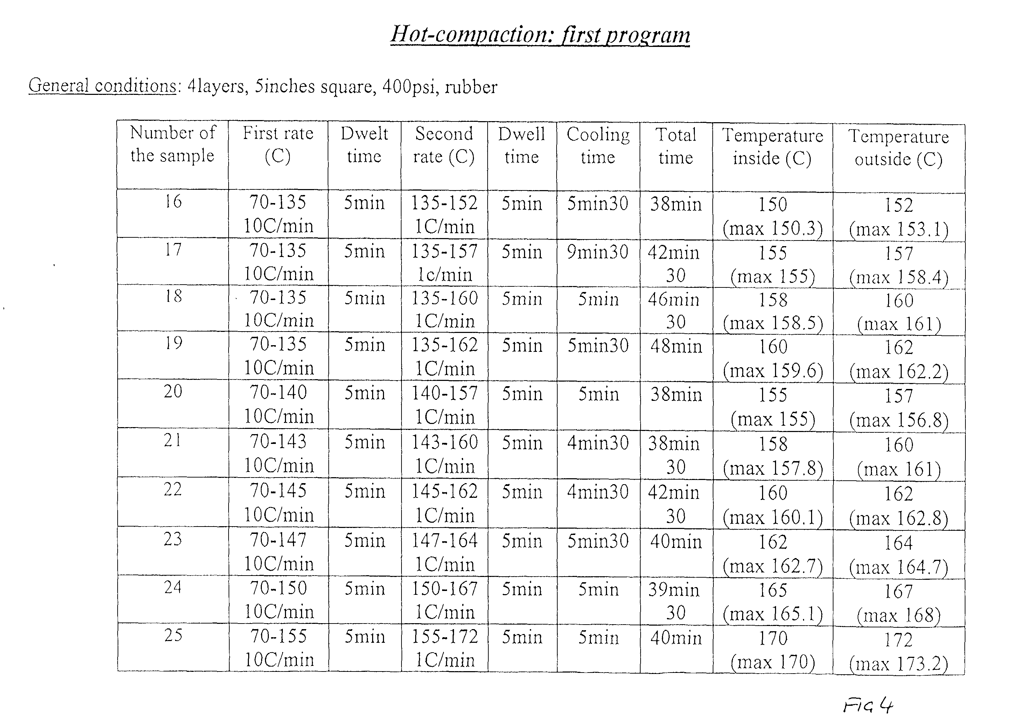

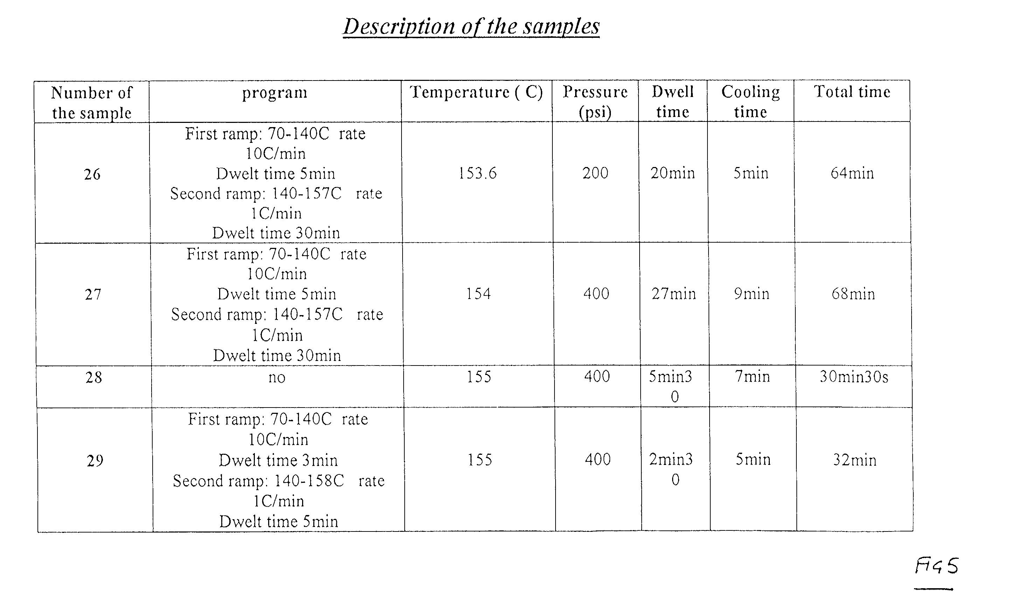

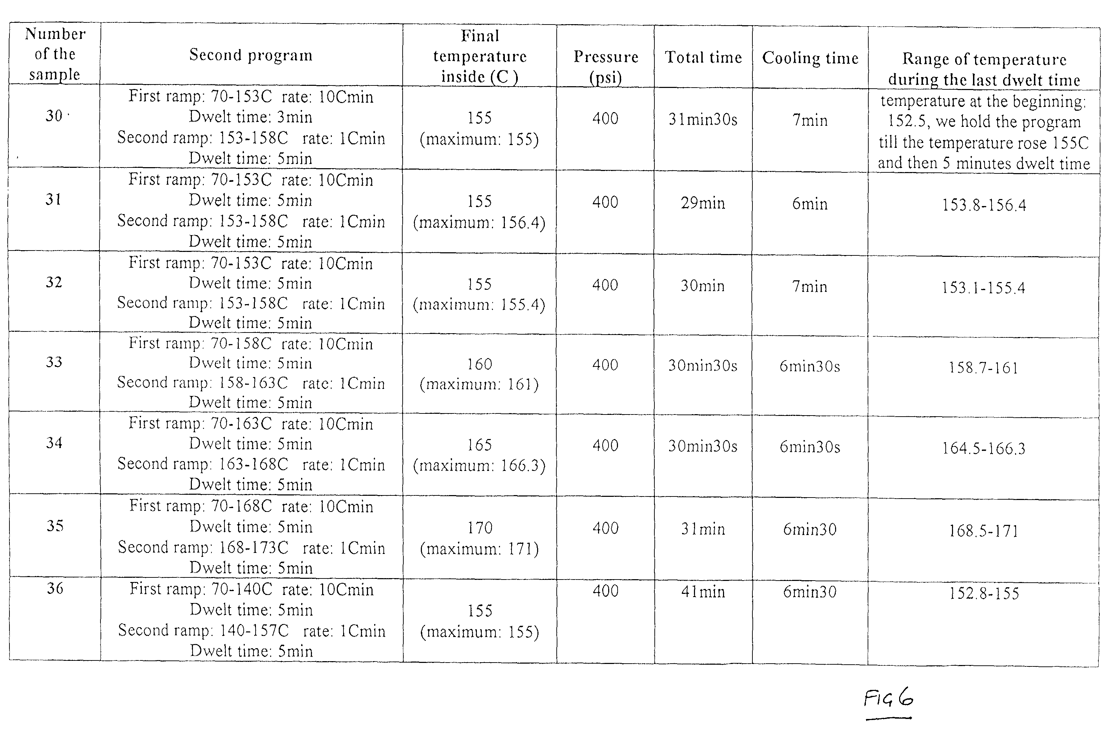

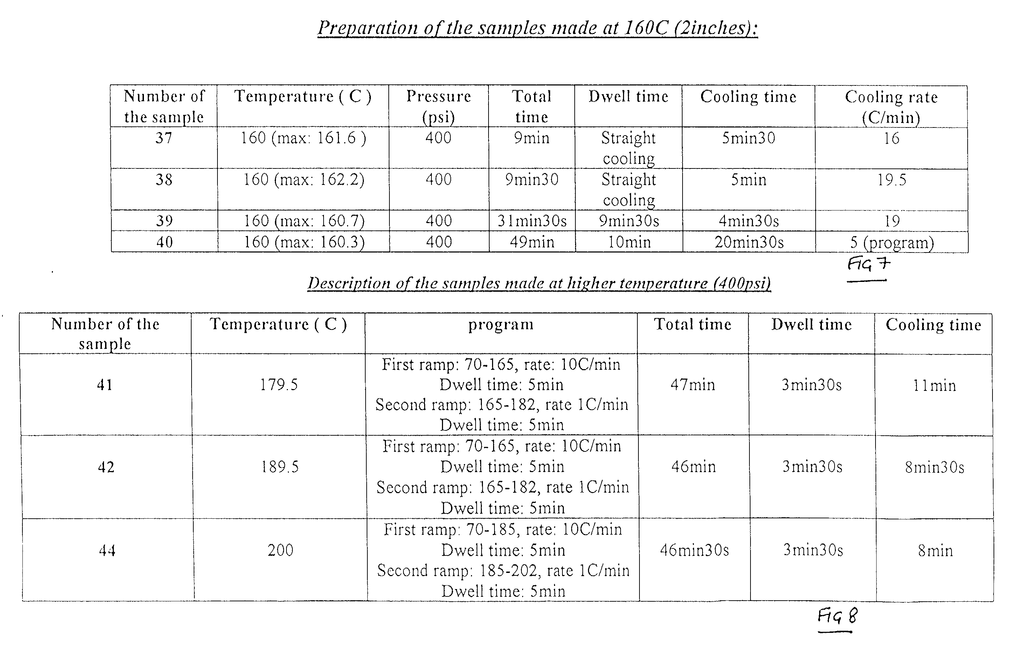

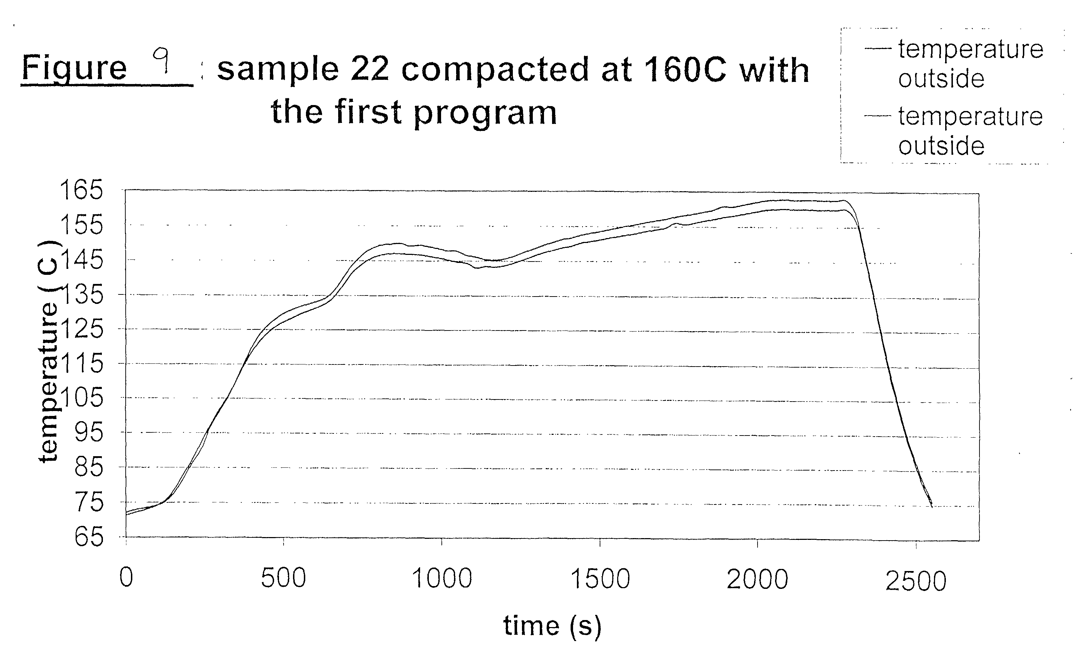

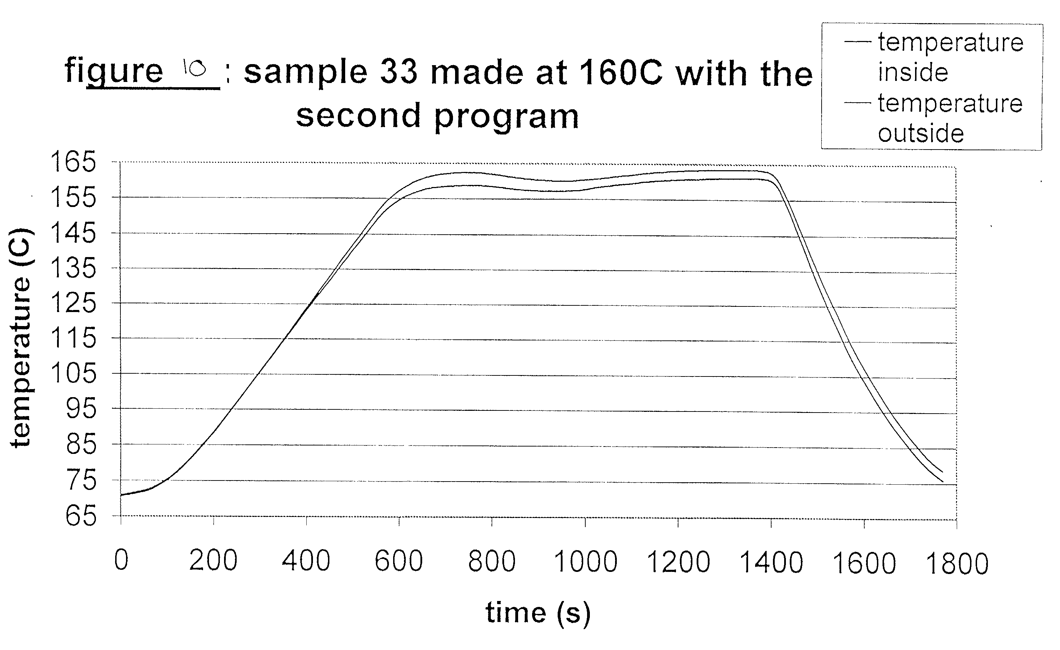

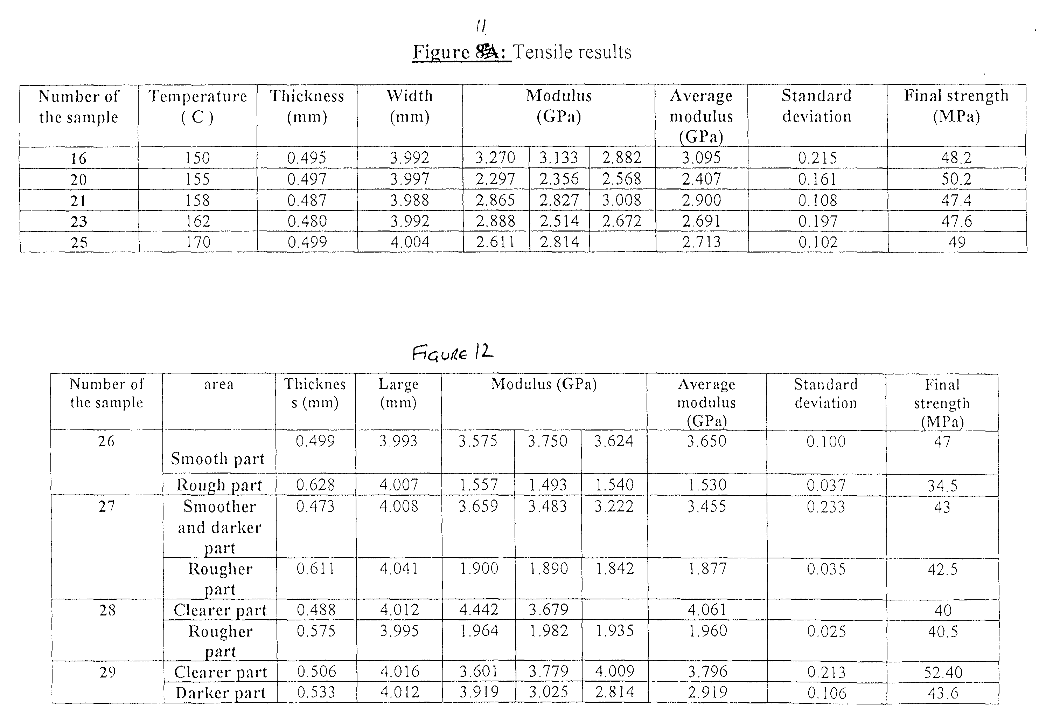

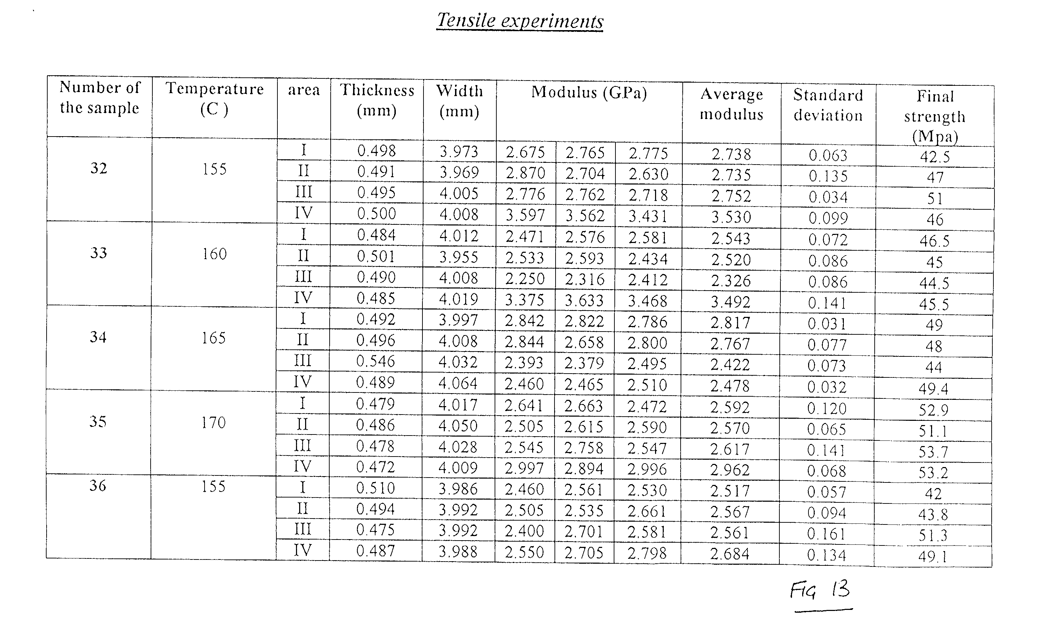

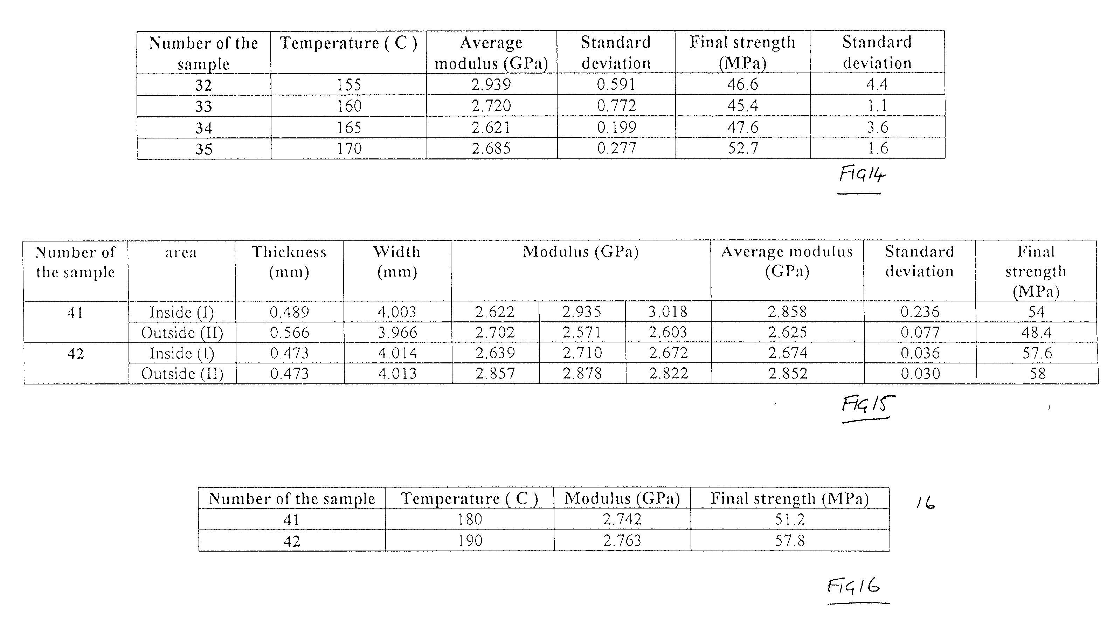

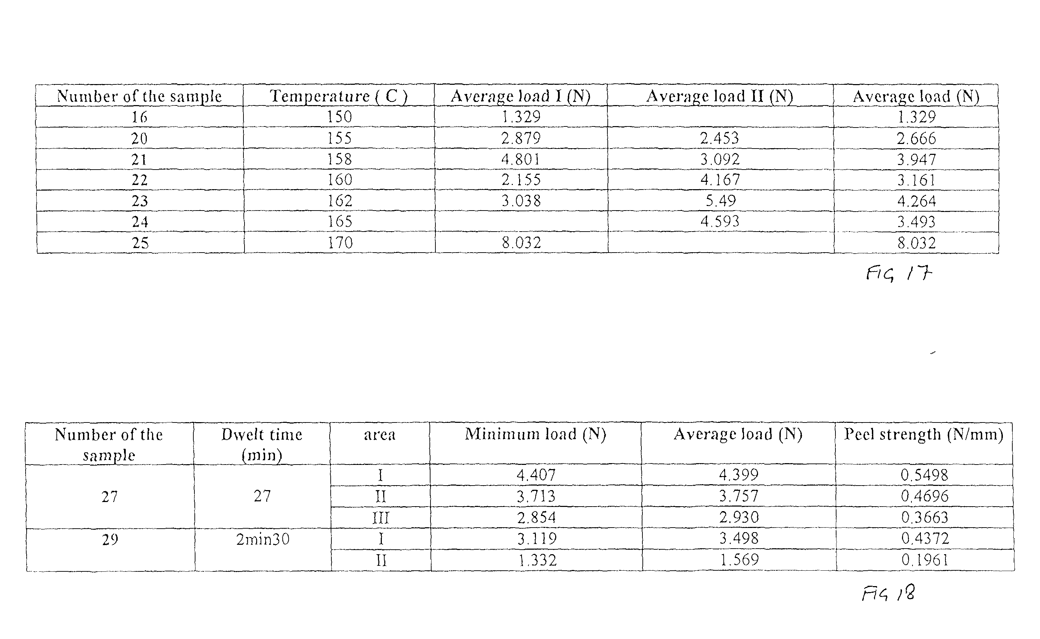

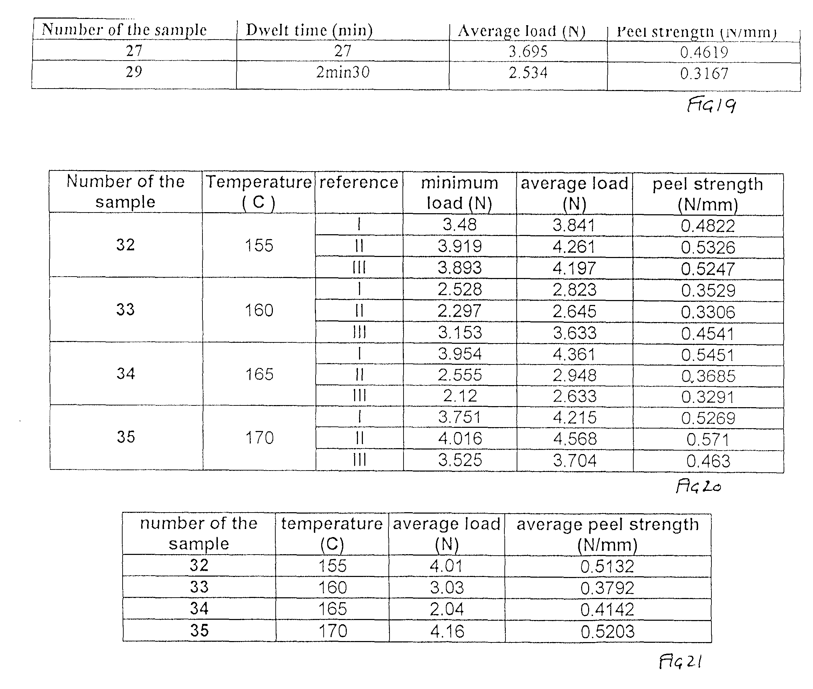

Figure 1 attached hereto illustrates the glass temperature (Tg) of the polymer material comprising 80% amorphous PVC and 20% PVCC and available through Rhovyl of France. The material is used to manufacture clothes having different properties such as flame retardancy, thermal, electrical and acoustic insulation and a shrinkage ratio close to zero. From the graph it will be appreciated that the Tg can be determined by isolating the minor disturbance to the comparatively straight line progression in the heat flow (mW) at about 87°C. Above this temperature the material becomes progressively more soft and pliable but it should be noted that it does not change from a solid to a liquid phase in the manner of a crystalline polymer.

Figure 2 illustrates the change in the glass temperature (Tg) and the melting temperature (Tm) for various polymerisation temperatures. From this graph it will be appreciated that (as a general rule) the greater the polymerisation temperature the less the Tg and Tm for a particular polymer material.

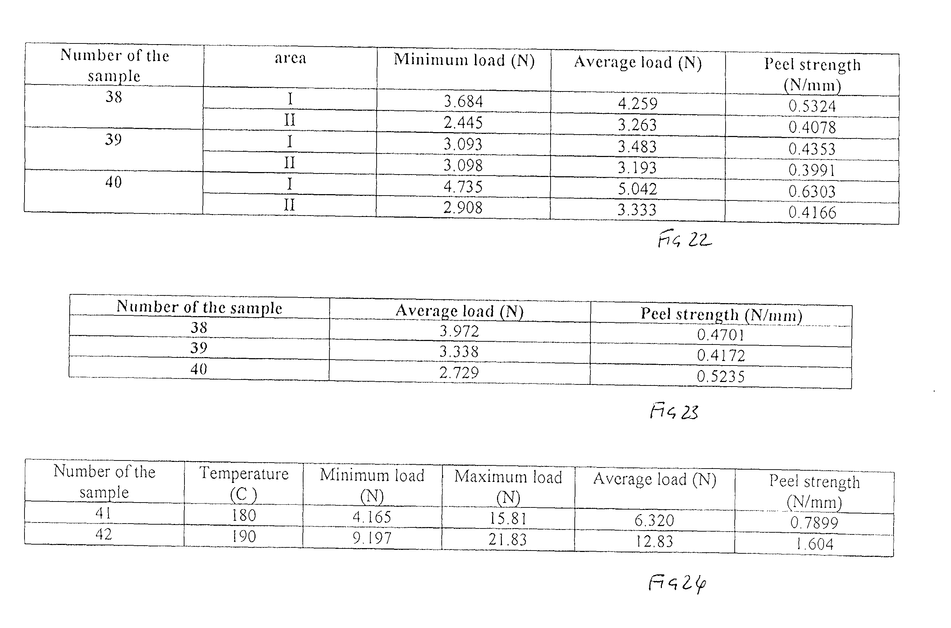

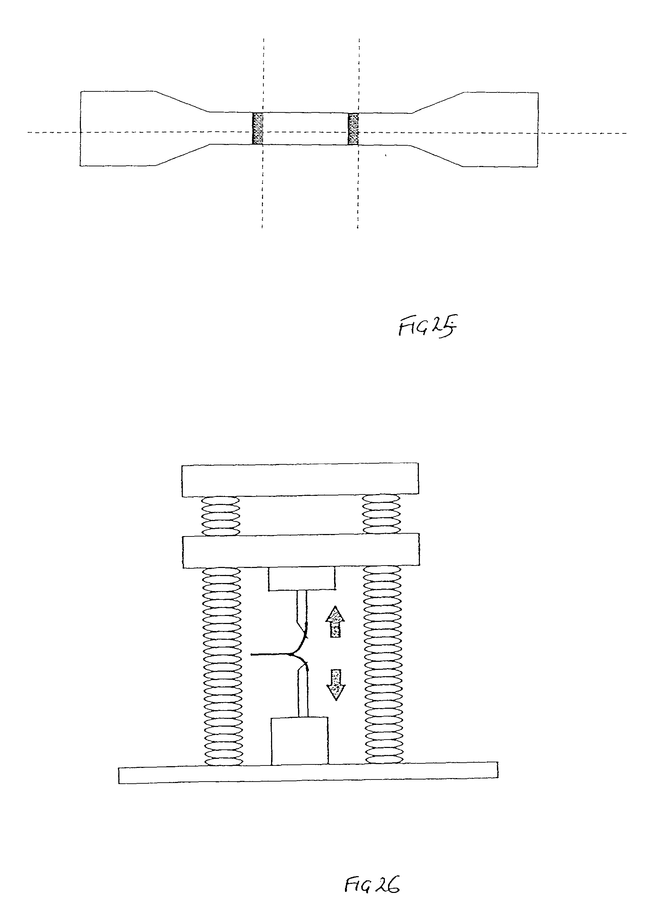

In order to determine the required compaction temperature for the above-mentioned example comprising 80% PVC and 20% PVCC we first attempted to compact a 2 inch square comprising two layers at 100psi and 80°C (temperature around the Tg) and observed the results. As no compaction appeared to take place we increased the temperature to 87°C but again no compaction appeared to take place. Finally, the layers were place directly between the plates of the compaction apparatus and the temperature was increased gradually until approximately 125°C was reached, at which point the layers had shrunk slightly and the surface finish of the article had changed. In order to produce sample 1 of table 3 the temperature was increased to 130°C whilst maintaining 100psi. The total heating time was recorded as 12 minutes with a dwell time at 130°C of just 30 seconds and a cooling time of 5 minutes 30 seconds. In order to provide a number of samples for future testing a further 14 samples each having four layers of cloth were produced in accordance with the remainder of Figure 3. As shown in Figure 3 each of the first 7 samples were compacted at 100psi and the remaining examples were compacted at 400 or 550psi. For each of the samples the total time, dwell time and cooling time was as detailed in the table.

The above-mentioned test samples were provided in order to determine the temperature at which optimum compaction takes place as well as the temperature above which a certain degree of reduction of material properties can be expected. Of the results obtained it was observed that the sheets were quite thin (1/2 millimetre) but the most striking observation was the presence of a clear, transparent area. This is in stark contrast with most other hot compacted sheets studied so far, which are usually transparent, but often translucent when compacted in this manner due to their crystalline nature. Initial samples showed just a small portion of clear, transparency and it was thought that this was due to the problems associated with providing a uniform pressure distribution across the surface of the material during compaction. In order to provide larger areas of clear, transparent material a piece of silicon rubber was used in the mould during subsequent testing. The clarity and transparency of the remaining samples was much greater than had been achieved without the silicon rubber and it was further observed that the structure of the woven cloth was hardly visible to the naked eye. This is in stark contrast with woven polypropylene materials formed in this manner where the structure can be quite distinctly observed. Increasing the pressure up to 400psi resulting in a larger area of clear, transparency and samples were made of higher temperatures of 150, 160 and 170°C. The sheets obtained had different colours, the one compacted at 150°C was yellow- coloured and more than half was clear/transparent, the sample made at 160°C was more brown and less clear whilst the sample produced at 170°C was quite dark. The darkening has been attributed to oxidation of the pigment used in these fibres as a deterioration of properties was not found.

For all the samples discussed so far the temperature control was conducted manually and in order to ensure reproducibility for future tests it was decided to repeat the tests using an electronically controlled heating step. Graph I illustrates the temperature profile employed where a compaction temperature of 150°C and comprises 5 temperature steps. Step 1 comprises a ramp increase in temperature from 70 to 135°C at a rate of 10°C per minute which is completed before a dwell time of 5 minutes which comprises step 2. A third step comprises a second ramp in temperature from 135°C to 152°C at a rate of 1°C per minute before step 4 which comprises a second dwell time of 5 minutes. It is at this higher temperature that compaction was taking place and once compaction was completed a final fifth step of straight-line cooling was employed back down to 70°C.

The first dwell time is only necessary because in the present apparatus there is a temperature lag of 15 - 20 °C between the temperatures of the plates and the inside of the mould. This dwell time allows the temperature inside the mould to reach the set temperature and ensures more even and consistent results. Clearly, more advanced and better controlled systems would allow for this dwell time to be eliminated. The second ramp in temperature from the second to the third temperature is at a lower rate which permits the temperature inside the mould to rise more evenly than during the first ramp in temperature.

In a simplified arrangement the following steps may be used:
(i) applying the compaction pressure to the assembly;
(ii) raising the temperature from a first, lower, temperature to a compaction temperature;
(iii) holding the temperature at the compaction temperature for a period of time; and
(iv) reducing the temperature from the compaction temperature in accordance with the predetermined cooling strategy.

In a specific example of the simplified arrangement the pressure applied in step (I) is in the region of 2.8MPa (400psi to the assembly); the temperature is increased to 152°C which is held for between 5 and 27 minutes before returning to room temperature in accordance with a predetermined cooling strategy.

In order to provide further samples for testing we then produced samples 16 - 25 as detailed in Figure 4 attached hereto. Whilst the specific temperatures and dwell times are shown in the table it is worth noting that each of the samples comprises a four layer, five inch square compacted at 400psi using a rubber sheet as described above in order to provide an even distribution of pressure across the article. Additionally, it should be noted that the temperature inside was taken by means of a thermocouple placed between the layers of cloth whilst the temperature outside comprises a temperature from a thermocouple positioned within the mould.

Figure 5 is a simplified table deleting the inside and outside temperatures from that described above but retaining the general conditions of four layers, five inch squares and the use of rubber compaction sheet. In this particular table, two pressures of compaction namely 200 and 400psi have been employed. Figure 6 comprises samples 30 - 36 and details the range of temperature during the last dwell time. Figure 7 details the treatments of two inch squares of the samples 37 - 40 and provides some very prolonged cycle times and alternative cooling regimes. Figure 8 provides details of samples 41, 42 and 44 which were prepared at elevated temperatures well above those discussed above. At these higher temperatures the results were a much darker sample and the surface of the finished article was quite different in that there seemed to be a thin layer of grease on the surface thereof. Excepting for the mechanical tests as to material strength, no further investigations were carried out on these samples.

In the samples provided for in Figure 6 onward comprised the second program of this present course of work and were conducted with a heating regime similar to the above but following the heating and cooling regime outlined in the tables.

In order to test the samples provided above we first employed an Instron tensile machine employing a videoextensometer to measure the deformation of the specimen. This is in contrast with a classic extensometer and provides better visual determination of the final results. Such equipment is more suitable for polymer materials as it is a no contact method and therefore avoids the requirement to employ an external force to the specimen. Samples were cut from compacted sheets with a suitable dumbbell cutter the shape of which is shown in Figure 25 and two target lines are drawn on the thinned central area with a suitable white pen. The sample was then lit such that the intensity of light on the target region was much higher than the rest of the image available on the videoextensometer screen. During testing, the first force of 10N was applied in order to flatten the sample and then a force of 25N was applied which places the specimen in its elastic phase and the modulus can be measured. The final step of testing comprises allowing the sample to be broken by applying continually increasing load at the rate of extension by 1mm/min.

In order to facilitate the conduction of a "peel test" the compacted layers were prepared with a 10µm narrow strip of aluminium incorporated at one end between the layers which acts as a starter crack for subsequent peel testing. 8mm larger test specimens were cut from the compacted sheets and the force required to peel the strips apart was measured by fixing the two extremities into the jaws of an Instron tensile machine. This test gave us a measure of the strength of bonding between the fibres and be shown diagrammatically in Figure 26.

In order to determine the influence of the processing temperature on the modulus of the final product a number of samples from the first and second programs were tested and the results are shown in Figure 27. Observing Figure 27 we can see that the modulus varies from between 2.4 to 3.1GPa. Considering the standard deviation between 0.1 and 0.2GPa (and the margin of error when plotting) we can confirm that the modulus does not depend significantly on the temperature of compaction. In addition to this test, a number of sheets from the second program were cut in directions perpendicular to each other and it was confirmed that the results did not vary.

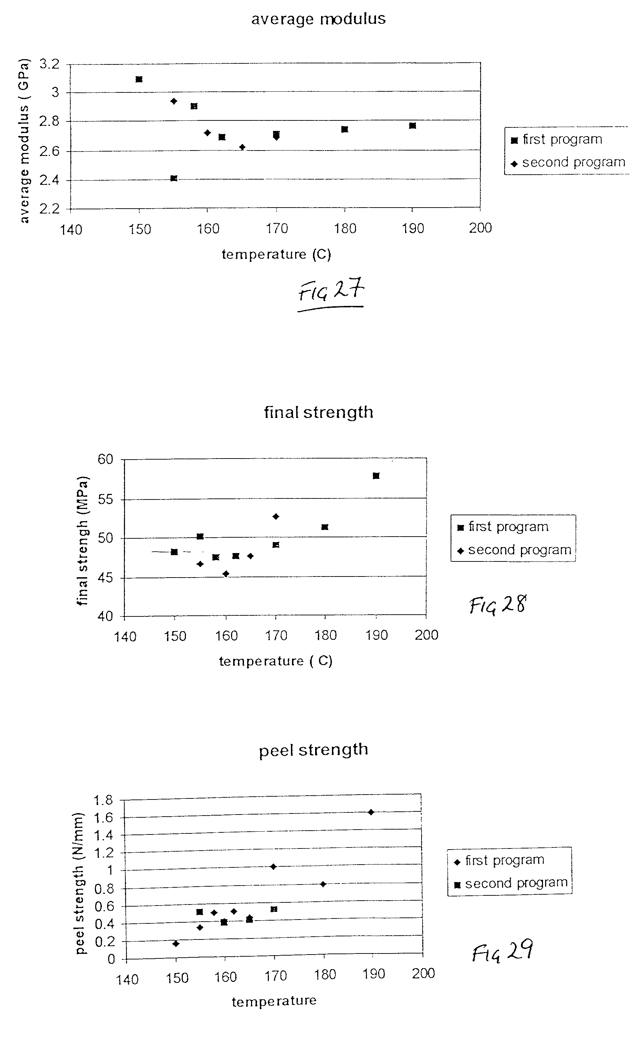

Further tests were conducted in order to establish the ultimate strength of the compacted articles. The results of this evaluation are shown in Figure 28 from which it can be appreciated that the ultimate strength ranges from between 47.4 to 57.8MPa and only the final sample taken at 190°C varies much from the others in the group. Whilst it seems reasonable to conclude that at lower temperatures the ultimate strength is not significantly affected by the processing temperature it is possible that at temperatures at and above 180°C there is an affect thereon. Additional experimentation on samples compacted at higher temperatures will be necessary in order to finalise this data.

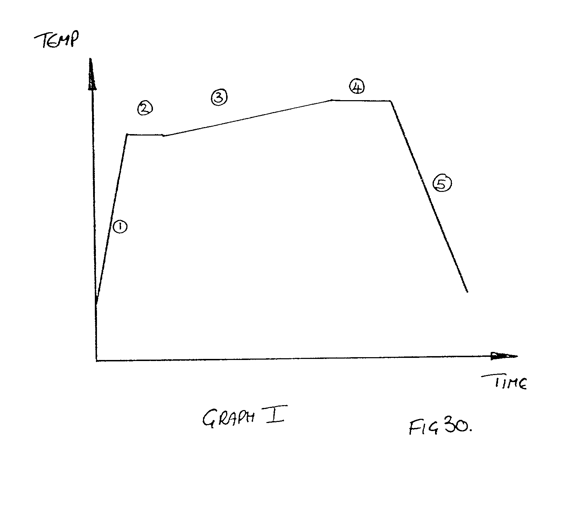

An additional "peel test" was conducted and the results are provided in Figures 17 and 18 attached hereto. A brief comparison of the results is shown in the graph of Figure 29 from which it can be appreciated that the peel strength is generally increased as the temperature of treatment rises. An additional test in connection with the "dwell time" on the modulus and final strengths of the compacted samples. The results of this test are shown below:

| Specimen made at 155C and 400psi (5 inch) with the first program | | | |
|---|---|---|---|
| Number of Sample | Dwell Time | Average Modulus (GPa) | Final Strength (MPa) |
| 27 | 27min | 2.666 | 42.8 |
| 29 | 2min30s | 3.357 | 28 |

| Specimen made at 160C and 400psi | | | |
|---|---|---|---|
| Number of Sample | Dwell Time | Average Modulus (GPa) | Final Strength (MPa) |
| 38 | Straight Cooling | 2.428 | 39.6 |
| 39 | 10min | 2.805 | 47.9 |

| Peel Test | | |
|---|---|---|
| Number of the Sample | Average Load (N) | Peel Strength (N/mm) |
| 27 | 3.695 | 0.4619 |
| 29 | 2.534 | 0.3167 |
| 38 | 3.972 | 0.4701 |
| 39 | 3.338 | 0.4172 |

From the above it will be appreciated that the modulus does not vary significantly with the dwell time but the final strength is slightly higher for longer dwell times. The peel test illustrates that the bonding between strands of the material is better with longer dwell periods.

Also considered during this testing was the influence of the cooling rate on the final material properties. The cooling rate could be a crucial factor for hot compaction and for this reason it is important to determine whether or not it has a significant impact for the material under discussion herein. The final results for these tests comprise samples 38, 39 and are shown in the table below.

| Results | | | | | | |
|---|---|---|---|---|---|---|
| Number of Sample | Temperature (C) | Cooling Rate (C/min) | Average Load (N) | Peel Strength (N/mm) | Average Modulus (GPa) | Final Strength (MPa) |
| 38 | 160 | 19.5 | 3.338 | 0.4172 | 3.253 | 46.15 |
| 39 | 160 | 5 | 2.729 | 0.5235 | 2.941 | 45.8 |

From the above, it can be noted that increasing the cooling rate some four times has little if any impact on the peel strength and the average load. Additionally, tensile tests illustrated that no significant variation in the modulus or the final strength can be detected. Consequently, it is reasonable to assert that the cooling rate has little if any impact on the final properties on the finished article.

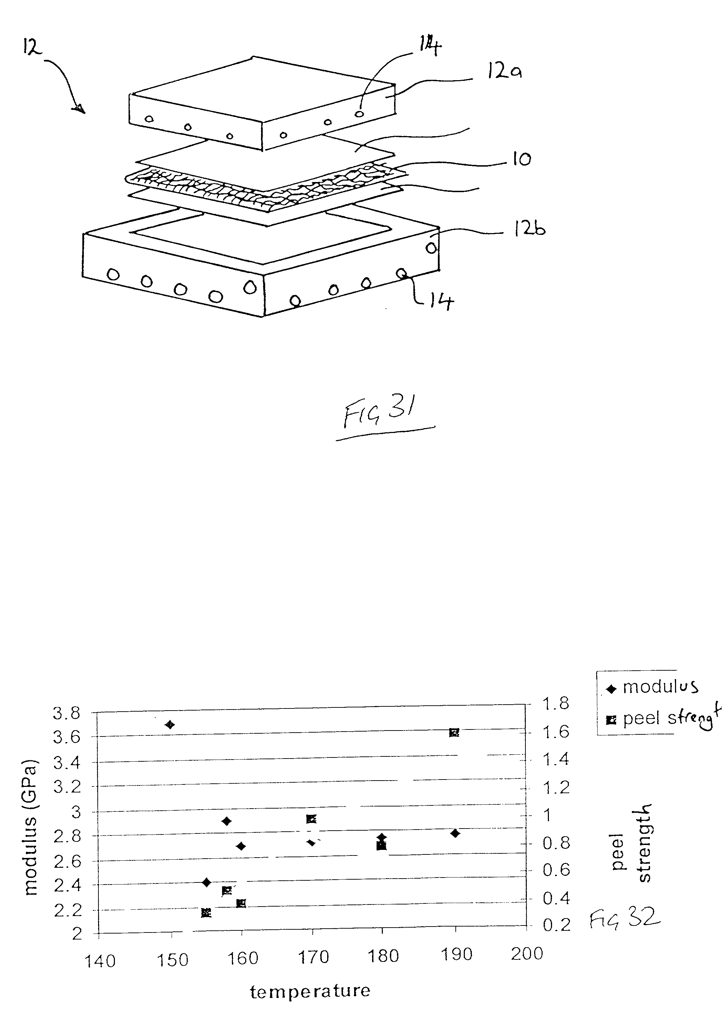

In order to confirm that forming of compound curved components is possible whilst employing the compaction method and the above-described material we conducted a further test in this respect. For this particular study, three sheets 10 (see Fig. 31) were prepared with different numbers of layers: four, six and eight and each were compacted in a five inch mould 12 at a temperature of 170°C and a pressure of 400psi. The plates of the mould 12a, 12b within the apparatus were heated to 120°C by heaters 14 and the sample sheet was placed on the bottom plate 12b and allowed to warm for five minutes in order to become soft. The top and the bottom of the moulds shown in Figure 31 were then pushed together before the heating oven was opened and the articles allowed to cool in accordance with the above-discussed practice. For each of the specimens it can be confirmed that thermo forming was successful as the shape obtained was dimensionally accurate, stiff and resilient. This was particularly the case for the sample made with eight layers.

In order to confirm the viability of the suggestions made above apply across a range of material further experimentation was conducted in connection with pure PVC material in the form of grade L9Y (high shrinkage 55% at 98°C) multifilament fibre provided by Elf Atochem.

As mentioned above, PVC is an amorphous polymer (Tg∼85°C) having no crystals within the structure and therefore no sharp melting temperature. As outlined above, hot compaction was considered to work well with the PVC/PVCC cloth as samples can be made over a wide temperature range, although the optimum was considered to be 170 ± 10°C. It is thought that this wide temperature window indicates a different bonding mechanism (fusion or a chemical effect) to that of crystalline melting seen with the semi-crystalline polymers previously studied. The peel strengths were good in as much as they were in the upper range of the material studied so far. Additionally, the modulus was in the order of 3GPa and the strength was ∼60MPa and the woven cloth produced well bonded transparent sheets.

In order to ascertain whether the blend of PVC and PVCC was an important factor for the hot compaction of PVC we compacted further samples as detailed below. The first three samples comprise unidirectional LY (pure PVC) fibres and each was compacted at the optimum temperature of 170°C. The comparative results appear to confirm that hot compaction of amorphous polymers is not only possible but produces advantageous results. Again, clear transparent regions were obtained for the pure PVC samples which indicates good compaction. Additionally, there is good retention of the oriented properties of the original fibre within the compacted sheet. The transverse strength of the unidirectional samples was high, reflecting excellent bonding and the modulus value of the unidirectional samples suggest the fibre was not as highly drawn as that used in the cloth sample. Woven cloth appears to be a better form for compaction of PVC, as for most oriented fibres, while the unidirectional samples showed regions where the fibres had broken (due to high shrinkage and a soft material at elevated temperature), a woven sample showed no evidence of this. Of course the difference in behaviour could easily be due to the difference in the two fibres used. Other amorphous polymers such as polyacrylonitrile (acrylic fibres) should benefit from this technique.

| | | Modulus (GPa) | Longitudinal Strength (MPa) | Transverse Strength (MPa) | Peel Strength N/10mm |
|---|---|---|---|---|---|
| Unidirectional L9Y | Original fibre | 5.02 | 320 | | |
| | Compacted Longitudinal | 3.8 | 100 | | |
| | Transverse | 2.4 | | 30 | |

## Claims

1. A method of producing an article comprising the steps:
d) providing a raw material in the form of polymer elements;
e) heating said material to above a first predetermined temperature; and
f) compacting said material whilst above said first predetermined temperature, **characterised in that**:
said raw material comprises an amorphous polymer and said temperature and pressure of compaction are sufficient to cause the polymer elements to bond to each other.

2. A method as claimed in which said predetermined temperature comprises a temperature a predetermined value above the Tg temperature of the polymer.

3. A method as claimed in claim 1 or claim 2 in which the pressure and temperature of compaction are maintained for a predetermined period of time.

4. A method as claimed in claim 1 or 2 in which said temperature is between 125°C and 190°C.

5. A method as claimed in claim 4 in which the temperature is between 135°C and 150°C.

6. A method as claimed in claim 4 or 5 in which the pressure compaction was in the region of (up to) 100psi.

7. A method as claimed in claim 4 in which the temperature is between 150 and 190°C.

8. A method as claimed in claim 7 in which the pressure of compaction is in the region of (up to) 400psi.

9. A method as claimed in any one of the previous claims including the further steps of:
(vi) raising the temperature from a first, lower, temperature to a second, higher, temperature at a first rate over a first period of time;
(vii) holding the temperature at said second temperature for a second period of time;
(viii) raising the temperature from the second temperature to a third, higher, temperature at a second rate over a third period of time;
(ix) holding the temperature at said third temperature for a further period of time; and
(x) reducing the temperature from said third temperature in accordance with a predetermined cooling strategy.

10. A method as claimed in claim 9 in which:
(vi) the temperature is increased to a second temperature of 135°C at 10°C/min;
(vii) the second temperature is held for between 5 minutes;
(viii) the temperature is increased to a third temperature of 152°C at approximately 1°C/min;
(ix) the third temperature is held for between 5 minutes and 27 minutes; and
(x) the temperature is then returned to a lower (room) temperature in accordance with the predetermined cooling strategy.

11. A method as claimed in any one of claims 1 to 8 including the further steps of:
(i) applying the compaction pressure to the assembly;
(ii) raising the temperature from a first, lower temperature to a compaction temperature;
(iii) holding the temperature at the compaction temperature for a period of time; and
(iv) reducing the temperature from the compaction temperature in accordance with a predetermined cooling strategy.

12. A method as claimed in claim 11 in which the pressure applied in step (I) is in the region of 2.8MPa (400psi), the temperature is increased to 152°C and is held for between 5 and 27 minutes before returning to the lower temperature in accordance with a predetermined cooling strategy.

13. A method as claimed in any one of claims 1 to 12 in which the material comprises PVC.

14. A method as claimed in any one of claims 1 to 13 in which the material comprises a combination of amorphous and crystalline polymers.

15. A method substantially as described herein with reference to the accompanying drawings.

16. An article manufactured in accordance with the method of any one of claims 1 to 15.

17. An article comprising a hot compaction of amorphous polymer material.

18. An article comprising an amorphous polymer in which the filaments/elements thereof are bonded to each other by means of the application of an elevated temperature and pressure.

19. An article comprising soft bonded elements of amorphous polymer material.

20. An article substantially as described herein with reference to the accompanying drawings.
